# EUROPEAN PATENT APPLICATION

(11) **EP 1 969 952 A1**
(43) Date of publication of application: **17.09.2008**
(21) Application number: 07103708.9
(22) Date of filing: 07.03.2007
(51) Int. Cl.: A23L 1/29, A23L 1/30

(54) **Allergen-free or dairy free LCPUFA powdered compositions and the use thereof in food products and especially infant formulas**

(71) Applicant: Friesland Brands B.V., 7943 PE Meppel (NL)
(72) Inventor: van Seeventer, Paul Bastiaan, 7943 SC Meppel (NL); Steenwelle, Lucas Wilhelmus Johannes, 8012 VE Zwolle (NL)
(74) Representative: van Loon, C.J.J.

(57) **Abstract**

The present invention relates to allergen-free (or at least dairy free) spray dried composition comprising an oxidation sensitive edible oil and a matrix material. The matrix material comprises a specific emulsifying agent and a specific glucose syrup.
Further, the invention relates to a process for preparing such compositions and to the use of such compositions in an infant food product.

## Description

The present invention relates to long chain poly unsaturated fatty acids (LCPUFAs) in powder form, and in particular to such products encapsulated in a material that is allergen free or at least free of dairy components. In addition, the present invention is directed to the use of LCPUFAs in powder form in food products. In a preferred embodiment, the LCPUFAs are used in infant formulas.

Allergen free or dairy component free formulations are particularly important for specific nutritional purposes such as special infant formulas. Examples of such a special infant formula are formulas based on soy, formulas which are lactose-free; and vegetarian alternatives to milk-based infant formulas for infants. Soy-based infant formulas may also be fed to infants with an intolerance to cow milk-based feedings.

LCPUFAs have a number of unsaturations. Such compounds are rather sensitive to oxygen or other chemicals that react with unsaturated bonds. The reacted products loose their favourable effects and may advertise to taste and smell problems. Moreover the storage stability of LCPUFAs is rather restricted.

It is known that the encapsulation of LCPUFA oils can result in a more easy application of such oils in various food products. For instance the use of LCPUFAs (e.g. arachidonic acid (ARA) docosahexanoic acid (DHA) gamma linolenic acid (GLA)) in infant formula products or, more in general, in various types of food applications, aimed to improve the nutritional value of such products, is nowadays common.

Examples of encapsulated LCPUFA ingredients, which are suitably designed for such applications, are known, and specific measures to improve the stability of such encapsulates have been undertaken and are described in the prior art. Examples of such an encapsulate with improved stability have been described by Augustin in J. Food Science (71) no 2, (2006), E25-E32 and in WO 01/74175. Another example is EP-A-0 648 076, wherein the use of caseinate is described for the production of well protected oil encapsulates.

Coating materials used to overcome the difficulties with sensitive oils, by encapsulating LCPITFAs, or LCPUFA containing compositions often contain proteins and/or other components that may give allergic reactions. For example, (cow's) milk protein may give rise to allergic reactions.

It has been proposed in WO 2006/006856 to use mannitol as predominant coating material for sensitive oils such as LCPUFAs, optionally together with allergen free materials such as soy proteins or modified starches such as nOSA-starch or Hi-cap. It is however noted that because of legal considerations products like infant formulas may not contain mannitol.

There is a need to provide encapsulated (oxygen) sensitive oils, e.g. LCPUFAs, wherein the encapsulating material does not contain allergens, or at least does not contain dairy components. That is, more and more the demand is increasing for allergen free or, more specific, dairy free ingredients. Products with such constraints are especially demanded within specific fields of food applications. A good example is the use in hypoallergenic or allergen-free infant formulas.

One way to obtain a hypo-allergenic infant formula is to use dairy protein hydrolysates. However, the use of such dairy protein hydrolysates as an alternative for intact dairy proteins such as caseinate normally does not results in stable LCPUFA encapsulates. The use of proteins from different sources than dairy to render such encapsulates to some extent oxidatively stable are also known. See, for example Journal of Agricultural and Food Chemistry (1996) 44, 1314-1320.

The above-cited publications describe the functionality of proteins such as caseinate, soy protein isolate or whey protein. However, the above examples do not evolve into a powder, which really can fulfil both demands of being dairy free and leading to a sufficiently oxidative stable powdered composition.

In, for instance, EP-A-1 586 371, it is proposed to use combinations of proteins with modified starch to render the obtained encapsulate more stable. However, such encapsulates also do not fulfil the demands for an acceptable stability or shelf life and for a dairy free label.

EP-A2-1 066 761 describes a formulation, which is dealing with storage stability. EP-1 066 761 relates to compositions comprising fat soluble substances in a glassy carbohydrate matrix. The fat soluble substances may *e.g.* be vitamins, carotenoids and PUFA's. The glassy matrix is composed of maltose or maltose syrup, or a mixture of low molecular weight carbohydrates and high molecular weight carbohydrates. It makes use of emulsifiers, which would still result in relatively less stable encapsulates. Another disadvantage of formulations using such emulsifiers is the fact that such emulsifiers as ingredients may not be accepted by local regulations for infant formulas or follow-up formulas.

Journal of Agricultural and Food Chemistry vol 53 (2005), 137-144 describes the anti oxidative effect of soy protein isolate, when formulated in powdered compositions containing LCPUFA oils or esters. Therefore, solutions being based on soy protein seem to create options for further development of dairy-free but acceptable oxidatively stable powdered LCPUFA formulations or processes leading to such formulations do not seem to have been provided for commercialisation.

In an attempt to enhance the antioxidative activity of emulsifying agents such as soy protein used in powdered LCPUFA compositions, it has now been discovered that the choice of the type of the carbohydrate matrix has an effect on the oxidative stability of powders. Particularly, an enhanced oxidative stability of LCPUFA powdered formulations has been found when using soy protein isolate in combination with glucose syrups with a Dextrose Equivalent-range (a DE-range) of 40-50, as compared to lower DE ranges. Although more difficult to process in drying installations, the use of spray drying techniques, so-called Filtermat® (*ex* Niro A/S Denmark) of emulsifying agents spray drying installation offers opportunities to dry products containing as an ingredient reasonable amounts of such glucose syrups with DE in the range of 40-50. "Reasonable amounts" encompass more than 50% of glucose syrup solids. Glucose syrups having DE values higher than 50-60, are very difficult to be spray dried and result typically in very hygroscopic products. The use of glucose syrups with a lower DE, typically in the range of 20-35, when used in combination with soy protein as encaspulant or emulsifying agent, do surprisingly not result in the described effect according to this invention.

In accordance with a first aspect, the present invention relates to a spray-dried allergen-free or at least dairy free composition comprising:
(i) from 10-80 wt.%, preferably from 20-60 wt.% of an oxidation sensitive edible oil; in a matrix of
(ii) an emulsifying agent selected from the group consisting of soy protein and emulsifying modified starches, in preferred embodiments, typical amounts are in the range of 2-20 wt.%, more preferably in the range of 5-10 wt.%; and
(iii) glucose syrup with a dextrose equivalent DE in the range of 40-50, in preferred embodiments, typical amounts of glucose syrup present are in the range of 15-85 wt.%, more preferably in the range of 30-60 wt.%.

In a preferred embodiment, the composition according to the invention further comprises one or more antioxidant. Particularly, the composition may comprise at least one antioxidant in the matrix, preferably an ascorbate such as sodium ascorbate. Alternatively or in addition, the composition according to the invention may comprise at least one antioxidant in the oil, preferably being an antioxidant selected from the group consisting of lecithin, tocopherol, ascorbyl palmitate and mixtures thereof.

The composition according to the invention, can further comprise a stabiliser and preferably dipotassium phosphate.

The presence of a free flowing aid, such as tricalcium phosphate, is additionally preferred.

In a preferred embodiment, the composition according to the invention is in free flowing form, said powder preferentially having a mean particle size of from 20-800, preferably 60-600, and preferably 100-300 µm.

The most preferred embodiments comprise or contain as the oxidation sensitive edible oil LCPUFA.

In a second aspect, the present invention relates to a process for preparing a composition as defined in the present description and appending claims, comprising forming an aqueous emulsion comprising the edible oil, glucose syrup and emulsifying agent, and spray-drying said emulsion. In a specifically preferred embodiment, the spray drying is carried out using a Filtermat spray drying installation type spray dryer. Such spray dryers use nozzle atomization in a co-current tower that directs the semi-dried particles downward onto a moving belt. The material is then gently conveyed as a porous layer to zones of post-drying and cooling resulting in a crisp cake-like structure that breaks up at the end of the belt.

In a third aspect, the present invention is directed to the use of the composition according the invention in a food product.

Further advantages and embodiments of the present invention are elaborated herein-below.

The compositions of the invention are suitable for use in a food product. The compositions may be consumed themselves, but they are typically incorporated into a food product or a nutritional supplement before consumption.

The compositions according to the invention are preferably in the form of a free-flowing powder. The term "free-flowing powder", as used herein, is well known to those skilled in the art and includes particulate materials that can be poured (*e.g.*, from one vessel having an opening of from about 10 cm² to 50 cm² to another vessel of similar dimensions) without substantial clumping of the particles. In detail, the term "free-flowing" is used for a powdered material that is not sticky, and thus has no or hardly any tendency to agglomerate or to adhere to contact surfaces. The so-called angle of repose, θ*ᵣ*, is sometimes used as a measure for the flow properties of powders. The angle of repose is the angle that a cone of powder forms between a flat surface when it is poured onto that surface. Typically, for a free-flowing powder θ*ᵣ* is low, e.g. smaller than 60° or smaller than 45°, such as 40° or less.

Such free-flowing powders are sometimes referred to as "dry powders", although the word "dry" in this context does not necessarily imply the absence of water from the composition. Typically, the powder has a mean particle size of from about 10 µm to about 1000 µm, preferably from about 50 µm to about 800 µm, more preferably from about 90 to 400 µm and most preferably from 100 µm to about 300 µm. Particle sizes can be determined using techniques known to the skilled man, e.g. by using the well-known Coulter Counter. For example, more than 95 % by weight of the particles may have a size of less than 800 µm and/or more than 85 % by weight of the particles may have a size of less than 500 µm and/or more than 90 % by weight of the particles may have a size of greater than 20 µm and/or 65 % by weight of the particles may have a size of greater than 200 µm. The powder form of the composition of the invention preferably has a bulk density of from 200 to 600 g/l, such as from 300 to 500 g/l.

The compositions of the invention preferably comprise the edible oil in an amount of from about 10% to about 80% by weight, more preferably from about 20% to about 60% by weight, even more preferably from about 25% to about 35% by weight. The edible oil comprises at least 10% by weight of one or more carboxylic acids containing at least 18 carbon atoms and at least 2 carbon-carbon double bonds, or an ester thereof. The edible oil may comprise the one or more carboxylic acids or esters thereof either as the sole component or as one component of a mixture. The amount of the one or more carboxylic acids or esters thereof in the edible oil is at least 10 % by weight of the edible oil, preferably at least 25 % by weight, more preferably at least 28 % by weight of the edible oil. Other components of the edible oil may include, for example, saturated carboxylic acids having from 12 to 30 carbon atoms, mono- unsaturated carboxylic acids having from 12 to 30 carbon atoms and mixtures thereof, typically as their esters, such as glyceride esters, e.g. triglycerides.

The edible oil is preferably capable of providing health benefits.

The one or more carboxylic acids comprise at least 18 carbon atoms and at least 2 carbon-carbon double bonds. Preferably, the one or more carboxylic acids comprise from 18 to 30 (for example, 18 to 24) carbon atoms and from 2 to 6 carbon-carbon double bonds. The one or more carboxylic acids may be single carboxylic acids or mixtures of two or more carboxylic acids. Each of the one or more carboxylic acids may be in the form of the free acid, an ester or mixtures of free acid and one or more esters. Typically, the one or more carboxylic acids will be in the form of a complex mixture as present in or derived from a natural source. Examples of suitable carboxylic acids are docosahexaenoic acid (DHA), eicosapentaenoic acid (EPA), conjugated linoleic acid (CLA) (including the cis-9, trans-11 and trans-10, cis-12 isomers and mixtures thereof), stearidonic acid, linoleic acid, alpha-linolenic acid (ALA), gamma-linolenic acid (GLA), arachidonic acid (ARA) and mixtures thereof. Preferably, the one or more carboxylic acids are selected from DHA, EPA and mixtures thereof. In a mixture of DHA and EPA, the components can be present at any ratio, but a weight ratio of DHA/EPA of 0.4 to 8.0 may be preferred for certain applications.

The one or more carboxylic acids may be in the form of free acids (including salts thereof, such as sodium salts), or in the form of esters. Suitable esters include esters of the carboxylic acids with aliphatic alcohols containing from one to six carbon atoms, such as ethyl esters. Other suitable esters include esters with alcohols and polyols that are acceptable in food products. Examples of other esters are mono-, di-, and tri- glycerides and mixtures thereof. Triglyceride esters are particularly preferred, typically as the major component (*i.e.*, greater than 50% by weight) together with mono- and/or di- glycerides, for example up to 35% by weight diglycerides and up to 5% by weight monoglycerides.

The term edible oil covers oils that are non-toxic and can be consumed as part of a normal diet. The edible oil is typically a liquid at 25 °C and atmospheric pressure and is preferably liquid within the temperature range of 0°C to 25°C at atmospheric pressure. The oil is generally hydrophobic (for example it is substantially immiscible with water at a 1:1 weight ratio at 25 °C). The oil is preferably obtained or obtainable from a natural source, such as a vegetable oil, an animal oil (including fish oil) or animal fat, or a microbial oil, but may also be synthetic. The oil may be a mixture of oils from different sources or a mixture of a synthetic oil with one or more oils from natural sources.

It is particularly preferred that the edible oil is fish oil. The fish oil may be directly or indirectly obtainable from fish and may be, for example, a fish oil concentrate, a fractionated fish oil or a modified fish oil. Fish oils include oils from mackerel, trout, herring, tuna, salmon, cod, menhaden, bonito and sardines. Fish oil typically contains a mixture of omega-3 and omega-6 PUFA as their triglycerides, together with other components. In a particularly preferred embodiment, the oil is a fish oil concentrate comprising at least 30% by weight DHA. Alternatively, also oils obtainable from fungi and algae containing high amounts of LCPUFAs may be used.

The oil component of the composition preferably has a peroxide value of less than 10 meq/kg, preferably less than 9 meq/kg, more preferably less than 8 meq/kg, even more preferably less than 7 meq/kg, such as less than 6 or less than 5 meq/kg after storage in contact with air at 30°C for 12 weeks up to 16 weeks.

The protein source of this invention is preferably soy. Soy protein isolates have been used commercially for this purpose. Specific types of soy protein isolates with even enhanced nutritional properties are being applied and could be even more useful in infant formula application. An example of such a specific type of soy protein is a variant with a decreased content of phytic acid, phytates, and nitrite. Typically soy protein isolates are slighlty hydrolysed and contain to some content free amino acids. Another example of soy proteins with altered functionality are soy protein isolates, which have been modified by a Maillard reaction with reducing carbohydrates. Carbohydrate-protein conjugates with enhanced properties in the field of chemical and physical stability have been described in various publications.

In addition to the oil and emulsifying agents such as soy proteins (or modified starches), the matrix is for the largest part composed of the specific carbohydrates with a dextrose equivalent DE in the range of 40-50. A typical amount of such carbohydrates present in the matrix is in the range of 15-85%, more preferably in the range of 30-60%.

Other carbohydrates which may be present in the matrix may comprise one or more reducing sugars that may be single reducing sugars or mixtures of two or more reducing sugars. Reducing sugars include mono- and di- saccharides such as glucose, fructose and maltose. Additionally, reducing sugars encompass trisaccharides and higher saccharides. Oligosaccharides having up to 50 (mono) saccharide moieties, more preferably having up to 45 saccharide moieties, such as 10-45 saccharide moieties, may also suitably be used. In preferred embodiments, glucose syrups are used, preferably those having 25-55 dextrose equivalents (DE).

Carbohydrates or more specifically, glucose syrups, can be described as a wide range of hydrolysates from starch, which further can be described in terms of their 'dextrose equivalent' (DE) value. DE is a measure of the total reducing power of all sugars present relative to glucose as 100 and expressed on a dry weight basis. A indirect method for determination of the DE of a starch hydrolysate is the determination of the saccharide composition of such a product by methods known in the art such as high performance liquid chromatography (HPLC). The DE value can be obtained by calculation from such a total saccharide composition.

In accordance with the present invention, very good results are obtained while using glycose syrup having a DE of 40-50. Such formulations especially are very oxidatively stable.

Preferably, the other reducing sugars that may be present are derived from glucose syrup and, accordingly, are a mixture of reducing sugars. Glucose syrup is a starch hydrolysate containing reducing sugars, dextrin and water and typically contains not less than 20 % by weight of reducing sugars calculated as glucose. The amount of the other reducing sugars, in the form of mono-, di-, or trisaccharides, in the composition of the invention is preferably from about 10% to about 70 % by weight, more preferably from about 30 % to about 60 % by weight, even more preferably from about 40 % to about 55 % by weight, drawn to the weight of the matrix materials.

The composition of the invention is preferably dispersible in water having a temperature of about 15 °C.

The compositions of the invention optionally comprise, in addition to the above components, and for as far as the required allergen free and/or diary component free properties are maintained, one or more of an emulsifying agent, an antioxidant, a flavouring agent, a free flowing agent and a colouring agent, which types of additives are well-known additives for the person skilled in the field of preparing spray-dried food-products and/or storage stable unsaturated oil products. Emulsifying agents, other than the earlier mentioned soy proteins, include for example, protein hydrolysate, as well as low molecular weight emulsifiers, such as monoglycerides, diglycerides, and lecithin. Other suitable surface active ingredients include emulsifying, modified starches, such as Hi cap^{®}. Such modified starches can, *e.g.*, be modified by reaction with n-octenylsuccinyl anhydride (NOSA). Antioxidants include ascorbic acid and its salts (*e.g.*, sodium salt), tocopherol, and carotenoids. Free flowing agents, which are also termed anti-caking agents, include e.g. tricalcium phosphate. Other optional components include metal chelating agents and/or buffering agents such as salts of citrate and/or ortho phosphate.

The compositions of the invention can be produced by a method which comprises forming an aqueous mixture comprising edible oil, glucose syrup and drying the composition. More particularly, the oil and all other ingredients for the powder are emulsified to a dry matter content of generally 50 to 70 % (w/w), all other ingredients being dissolved or dispersed in water prior to addition of/in the oil. The best results are obtained when the emulsification is performed in such a way that an average oil droplet diameter of less than 1 micrometer (which droplet size can be determined using for instance a Malvern Mastersizer^{®}). Typically, pre-emulsification is performed at a temperature of 45-65°C by means of an Ultra Turrax^{®} at 6000 to 10.000 rpm. Subsequently, a two stage high pressure homogeniser can be used (150-250 bar/30-50 bar). Drying is preferably carried out by spray drying.

Conditions for spray drying are known to, or can be readily determined by, those skilled in the art. Spray drying is preferably carried out under conditions such that the resulting powder has a mean particle size of from 20 µm to 800 µm. Suitable results are obtained when the emulsion prepared is fed in a spray dryer by means of a high-pressure pump operating at a pressure of 50 to 200 bar, using a nozzle system for atomisation known to those skilled in the art. The spray dryer operates typically with an inlet temperature of 150-200°C, and an outlet temperature of 60-90°C.

More preferably, to effectively spray dry formulations according to the invention to obtain free flowable powders in good yield, specific spray dry installations are used. Therefore, most preferably, the use of Deck or Filtermat® spray dry installations are used to render the above formulations into free flowing powders with the described powder morphology. Such installations are in general terms similar and known for its mild and versatile drying capabilities. Such types of spray dryer installation can best be described as dryers composed of a section wherein in a first stage the powder is rendered semi-dry (<15% moisture) and dried to the desired final moisture content (typical <5%) in a second stage after the semi dry powder has been collected on a porous moving belt.

The mixture may be prepared by combining the above components, for example by mixing and optionally stirring to form an emulsion. The emulsion is then preferably spray dried to a water content of less than 5% by weight (preferably less than 4% by weight). The particulate material (*i.e*., powder) thus formed is then collected.

The composition is preferably packaged in the presence of an inert gas (*e.g.*, nitrogen) and is advantageously stored at a temperature below room temperature, for example from about 5°C to about 10°C, prior to use.

The food products of the invention comprise from 0.01% to 20% by weight, preferably from 0.01% to 10% by weight, more preferably from 0.01% to 5% by weight, of a composition of the invention. The amount of the composition that is present in the food product will depend on the nature of the food product itself. For example, relatively high amounts of the composition may be tolerated in bakery products while smaller amounts are required in certain beverages. Suitable food products include, for example, bakery products (*e.g.*, bread, biscuits or cookies, snack bars), oil-based products (*e.g.*, spreads, salad dressings), dairy products (*e.g.*, milk, reconstitutable milk products, yoghurt, ice cream), infant formulas (which are liquids or reconstituted powders fed to infants and young children) and non-dairy beverages (*e.g*., fruit juice). Food products of the invention typically comprise up to 99% by weight water and up to 50% by weight of oils or fats other than the edible oil derived from the composition of the invention.

The use of the composition according to the invention has been found to increase the oxidative stability of the edible oil, as determined by off taste and/or odour. Additionally or alternatively, the stability of the edible oil may be determined by peroxide value and/or anisidine value.

The following non-limiting examples illustrate the invention and do not limit its scope in any way. In the examples and throughout this specification, all percentages, parts and ratios are by weight unless indicated otherwise.

All publications, patents and patent applications are incorporated herein by reference. While in the foregoing specification this invention has been described in relation to certain preferred embodiments thereof, and many details have been set forth for purposes of illustration, it will be apparent to those skilled in the art that the invention is susceptible to additional embodiments and that certain of the details described herein may be varied considerably without departing from the basic principles of the invention.

### Example 1 and 2:

The following formulations (Examples 1 and 2) were prepared (values in the table are parts by weight). Example 1 is a comparative example. Example 2 is the example of composition of the present invention.

| | Example 1 | Example 2 |
|---|---|---|
| | | |
| Marinol D40 | 30 | 30 |
| Glucose syrup (DE 30-35) | 59 | - |
| Glucose syrup (DE 45-50) | - | 59 |
| Soy protein isolate | 8 | 8 |
| Na ascorbate | 3 | 3 |
| Antioxidants | <0.1 | <0.1 |

| | | |
|---|---|---|
| *Marinol D40 (ex Lipid Nutrition, Wormerveer, NL) is a commercial fish oil concentrate containing about 40% DHA and 6% EPA, by weight based on total fatty acids. | | |

Examples 1 and 2 were prepared by spray drying a mixture comprising the various components using a Filtermat® installation. More specifically, Examples 1 and 2 were prepared by emulsification of the oils together with all ingredients at a dry matter content of 60 % w/w. Thereto, the ingredients other than oil were dissolved or dispersed prior to the addition of the oil. Pre-emulsification was performed at a temperature of 45 °C to 65° C by means of an Ultra Turrax at 6,000 to 10,000 rpm. Subsequently, a two stage high pressure homogeniser was used with 200 bar for the first stage and 30 bar for the second stage of homogenisation. The emulsions thus obtained were then fed at a temperature of 72-80 °C in to a Filtermat® spray dryer by means of a high-pressure pump operating at a pressure of 150 bar. The spray dryer was operated at an inlet temperature of 180 °C and an outlet temperature of 75°C. The obtained powders were analysed for moisture content: values ranging from 1.8% to 3.0% were found. All powders were free-flowing.

The compositions of Examples 1 and 2 were stored under air at 40°C for up to 10 weeks. The sensory stability of the compositions during an accelerated storage test was assessed. Sensory evaluation was also carried out by a team of panellists by tasting the powder (0.5 g/100 mL) when reconstituted in a soy based infant formula (milk-free and lactose-free). In the sensory tests, a lower number indicates less oxidative, rancid or fishy smell and taste and therefore a better product. The products were compared to a reference with no addition.

**Sensory evaluation at 40°C**

| Weeks of storage | Example 1 | Example 2 |
|---|---|---|
| 0 | 2 | 2 |
| 2 | 2 | 2 |
| 4 | 2.25 | 2.25 |
| 6 | 2.5 | 2.25 |
| 8 | 3.5 | 2.5 |
| 10 | 3.75 | 2.5 |

Sensory evaluation results show the effect of the present invention clearly.

## Claims

1. Spray-dried allergen-free or dairy-free composition comprising:
(i) from 10-80 wt.%, preferably from 20-60 wt.% of an oxidation sensitive edible oil; in a matrix comprising
(ii) an emulsifying agent selected from the group consisting of soy protein and emulsifying modified starches
(iii) glucose syrup with a dextrose equivalent DE in the range of 40-50.

2. The composition according to claim 1, comprising at least one antioxidant in the matrix, and preferably comprising an ascorbate in the matrix.

3. The composition according to claim 1 or 2, comprising at least one antioxidant in the oil, and preferably comprising an antioxidant selected from the group consisting of lecithin, tocopherol, ascorbyl palmitate and mixtures thereof.

4. The composition according to any one of the preceding claims, further comprising a stabiliser and preferably dipotassium phosphate.

5. The composition according to any one of the preceding claims, comprising a free flowing aid, and preferably comprising tricalcium phosphate.

6. The composition according to any one of the preceding claims, in free flowing form.

7. The composition according to claim 6, wherein the powder has a mean particle size of from 20-800, preferably 100-300 µm.

8. The composition according to any one of the preceding claims, wherein the oxidation sensitive edible oil comprises LCPUFA.

9. A process for preparing a composition as defined in any one of the preceding claims, comprising forming an aqueous emulsion comprising the edible oil, glucose syrup and emulsifying agent, and spray-drying said emulsion.

10. Use of the composition according to any one of the claims 1-8 in an infant food product.
